Europäisches Patentamt

European Patent Office

Office européen des brevets

(11) Publication number: **0 137 264**
**B1**

# EUROPEAN PATENT SPECIFICATION

(45) Date of publication of patent specification: 09.11.88

(51) Int. Cl.⁴: **B 62 D 11/10**

(21) Application number: **84110113.2**

(22) Date of filing: **24.08.84**

(54) Driveline for a track-laying vehicle.

(30) Priority: **25.08.83 GB 8322936**

(43) Date of publication of application:
**17.04.85 Bulletin 85/16**

(45) Publication of the grant of the patent:
**09.11.88 Bulletin 88/45**

(84) Designated Contracting States:
**BE DE FR GB IT NL SE**

(56) References cited:
**DE-A-2 917 430**
**DE-B-1 802 154**
**DE-B-2 412 562**
**US-A-3 545 303**

(73) Proprietor: **TOROTRAK (DEVELOPMENT)**
**LIMITED**
**101 Newington Causeway**
**London SE1 6BU (GB)**

(72) Inventor: **Greenwood, Christopher John**
**14 Edinburgh Close**
**Leyland Lancs (GB)**

(74) Representative: **Stables, Patrick Antony**
**Torotrak (Development) Limited 101 Newington**
**Causeway**
**GB-London SE1 6BU (GB)**

## Description

This invention relates to a driveline of the speed shaft steering type, for a track-laying vehicle such as a tank. It is an object of the invention both to promote the efficient transfer of driving power between left-hand and right-hand track drive shafts, and to avoid energy dissipation when steering.

In the "Triple Differential" transmission, described in pages 174—175 of "Gear Trains" by H. E. Merritt, published by Pitman in 1947, an input shaft drives a secondary shaft by way of a differential and a choice of change-speed gear pairs. Opposite ends of the secondary shaft are connected, by way of identical epicyclic combinations, to the left-hand and right-hand drive shafts, with the secondary shaft being connected to the ring gear of each epicyclic and the drive shaft to the planet carrier. The sun gears of the two epicyclics are in geared connection with each other by way of the half-shafts of the differential, and are also associated with separate left-hand and right-hand brakes. With neither brake applied, both drive shafts rotate at the same speed and the effect of the interconnection of the two sun gears is simply to cause both the drive shafts to rotate a little slower than the secondary shaft. If one of the brakes is applied, however, the effect of the sun gears interconnection is to cause the drive shaft on that side to speed up, and the opposite drive shaft to slow down. The result is that the vehicle steers away from the side where the brake is applied.

The present invention avoids the energy dissipation, inevitable when the steering brakes are applied in such a transmission, by substituting for those brakes a continuously-variable-ratio transmission driven by the same engine by which the drive shafts themselves are driven. The invention is a driveline for a track-laying vehicle, of the speed shaft steering type, including first and second track drive shafts, a drive transmission adapted to be driven by the vehicle engine, first and second summing epicyclic gears each with a first input driven by the drive transmission and an output driving a respective track drive shaft, and a third summing epicyclic gear having a first input adapted to be driven by the engine and a component driving a second input to the first summing epicyclic gear by way of suitable gearing, and is characterised in that a continuously-variable-ratio steering transmission has an input which is adapted to be driven by the engine and an output which provides second inputs to the second and third summing epicyclics respectively.

The continuously-variable-ratio steering transmission may be of the toroidal race rolling traction type. The third summing epicyclic gear may be a simple epicyclic gear of which the annulus is the said first input and is integral with an input shaft of the continuously-variable-ratio steering transmission, the sun gear is connected to the output shaft of the steering transmission, and the planet carrier is the output.

The output of the third summing epicyclic gear may rotate in the opposite sense to the output of the continuously-variable-ratio steering transmission, but the said suitable gearing may reverse the rotational sense of the drive so that the second inputs to the first and second summing epicyclic gears may rotate in the same rotational sense.

The drive transmission may be a continuously-variable-ratio transmission of the toroidal race rolling traction type.

The invention will now be described, by way of example, with reference to the accompanying drawings, in which:

Figure 1 is a schematic diagram of a driveline for a tank, and

Figure 2 is a more detailed diagram of a preferred embodiment of such a driveline.

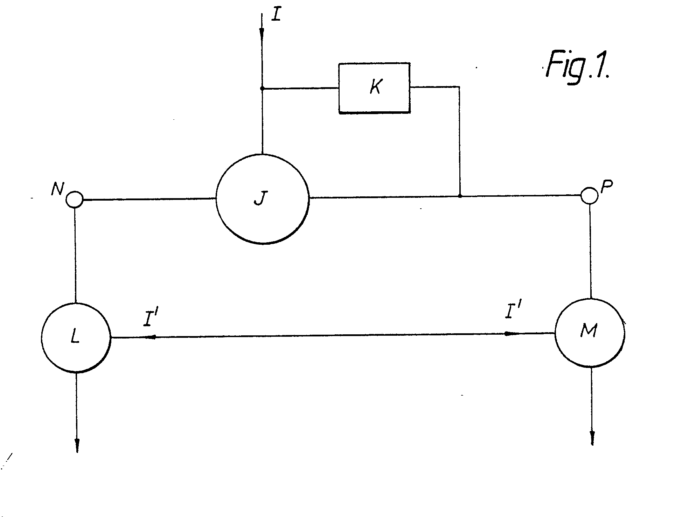

Referring first to Figure 1, drive I from the engine of a tank is geared to the inputs both of a continuously-variable-ratio steering transmission K and a summing epicyclic gear J. The engine also supplies drive I' to summing epicyclic gears L, M which output drive to respective track drive shafts. One output of the gear J is geared (N) at a suitable ratio to a further input of the summing epicyclic gear L, while another output of gear J is coupled to the output of the steering transmission K which drives, through suitable gearing P, a further input of the summing epicyclic gear M.

For straight drive, that is without a steering bias, the steering transmission K is set so that the inputs from respective gearing N, P to the two epicyclic gears L, M are equal. A steering bias is effected by changing the ratio of the steering transmission K in either direction. The continuously-variable-ratio transmission K is preferably designed, together with the ratios at N, P and J, to have an equal range of ratios at either side of the neutral steering point.

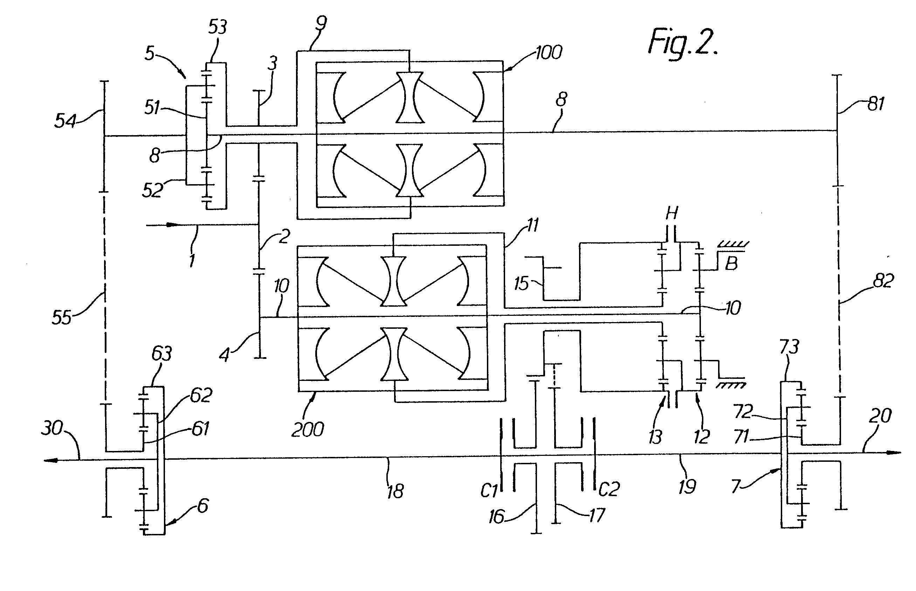

Referring now to Figure 2, which shows one example of the driveline of Figure 1, drive from the crankshaft 1 of the engine of a tank is geared both to a steer variator 100 and to a propulsion variator 200. In this example, both transmissions 100, 200 are the toroidal race-rolling traction type continuously-variable-ratio transmission. Drive from the propulsion variator 200 reaches the left-hand and right-hand track drive shafts 20, 30, by way of various epicyclic gears and clutches described in detail in British Patent Application No. 8322937 (corresponding to EP—A—141118, published 15.05.1985). Drive from the steer variator 100 is coupled to the propulsion drive by simple epicyclic gears 6, 7, which steers the tank by altering the relative speeds of the tracks.

Drive from the engine crankshaft 1 reaches the input shaft 10 of the propulsion variator 200 by gearing 2, 4. Drive from the input shaft 10 or the output shaft 11 of the propulsion variator 200 passes through an arrangement of epicyclic gears 12, 13, and clutches H, C1 or C2, to a cross-shaft of which portions 18, 19 are connected respectively to the annuli 63, 73, of simple epicyclic gears 6, 7. The planet carrier 62, 72, of each simple epicyclic gear 6, 7, provides a propulsion drive output to the respective drive shaft 30, 20.

The steer variator 100 receives its drive input from the engine crankshaft 1 by way of gearing 2, 3. Gearing 3 is coupled to the input shaft of the steer variator and also to the annulus 53 of a simple epicyclic gear 5. The output shaft 8 of the steer variator is connected at one end through gearing 81, 82, to the sun gear 71 of the simple epicyclic gear 7 which supplies drive to drive shaft 20. The other end of constant speed shaft 8 of the steer variator is connected to the sun gear 51 of the simple epicyclic gear 5, of which the planet carrier 52 is connected to drive the sun gear 61 of simple epicyclic gear 6 by way of gearing 54, 55. The simple epicyclic gear 5 causes the gears 54 and 81 to rotate in opposite rotational senses. The change of ratio introduced by the simple epicyclic gear 5 is compensated for by suitably selecting the ratio of gearing 55 and 82; in this example, gearing 55 provides a ratio of −2.86 (i.e. it reverses the rotational sense) and gearing 82 a ratio of 1.0.

Simple epicyclic gear 6 effectively sums the drive from the cross shaft (at 18) and from the steer variator via gearing 54, 55, to provide a steered output on drive shaft 30. Similarly, simple epicyclic gear 7 sums the drive from the cross shaft (at 19) and gearing 81, 82, to provide a steered output on drive shaft 20.

## Claims

1. A driveline for a track laying vehicle, of the speed shaft (8) steering type, including first (30) and second (20) track drive shafts, a drive transmission (200) adapted to be driven by the vehicle engine, first (6) and second (7) summing epicyclic gears each with a first input (63, 73) driven by the drive transmission and an output (62, 72) driving a respective track drive shaft, and a third summing epicyclic gear (5) having a first input (53) adapted to be driven by the engine and a component (52) driving a second input (61) to the first summing epicyclic gear via suitable gearing (54, 55), characterised in that a continuously-variable-ratio steering transmission (100) has an input (9) which is adapted to be driven by the engine and an output (8) which provides second inputs (71, 51) to the second (7) and third (5) summing epicyclics respectively.

2. A driveline according to Claim 1, characterised in that the continuously-variable-ratio steering transmission (100) is of the toroidal race rolling traction type.

3. A driveline according to Claim 1, characterised in that the third summing epicyclic gear (5) is a simple epicyclic gear, of which the annulus (53) is the said first input and is integral with an input shaft (9) of the steering transmission, the sun gear (51) is connected to the output shaft (8) of the steering transmission, and the planet carrier (52) is the output.

4. A driveline according to Claim 1, characterised in that the output (52) of the third summing epicyclic gear (5) rotates in the opposite sense to the output (8) of the steering transmission (100) but the said suitable gearing (54, 55) reverses the rotational sense of the drive so that the said second inputs (61, 71) to the first (6) and second (7) summing epicyclic gears rotate in the same rotational sense.

5. A driveline according to Claim 1, characterised in that the drive transmission (200) is a continuously-variable-ratio transmission of the toroidal race rolling traction type.

## Patentansprüche

1. Antrieb für Gleiskettenfahrzeuge der Bauart mit Wellendrehzahl-Lenkung (8), mit einer ersten (30) und einer zweiten (20) Gleiskettentriebwelle, einem vom Fahrzeugmotor angetriebenen Antriebsgetriebe (200), einem ersten (6) und einem zweiten (7) Planetenrad-Summengetriebe mit jeweils einem ersten Eingangsglied (63, 73), das vom Antriebsgetriebe angetrieben wird, und einem Abtriebsglied (62, 72), das jeweils eine Gleiskettentriebwelle antreibt, und mit einem dritten Planetenrad-Summengetriebe (5) mit einem ersten Eingangsglied (53), das vom Motor antreibbar ist, und einer Komponente (52), die ein zweites Eingangsglied (61) des ersten Planetenrad-Summengetriebes über geeignete Getriebeglieder (54, 55) antreibt, dadurch gekennzeichnet, daß ein Lenkgetriebe (100) mit kontinuierlich veränderlichem Übersetzungsverhältnis ein Eingangsglied (9) aufweist, das vom Motor antreibbar ist, und ein Abtriebsglied (8) aufweist, welches das jeweils zweite Eingangsglied (71, 51) für das zweite (7) und dritte (5) Planetenrad-Summengetriebe bildet.

2. Antrieb nach Anspruch 1, dadurch gekennzeichnet, daß das Lenkgetriebe (100) mit kontinuierlich veränderlichem Übersetzungsverhältnis als Toroid-Reibradgetriebe ausgeführt ist.

3. Antrieb nach Anspruch 1, dadurch gekennzeichnet, daß das dritte Planetenrad-Summengetriebe (5) ein einfaches Planetengetriebe ist, dessen Ringrad (53) das genannte erste Eingangsglied darstellt und einteilig mit einer Eingangswelle (9) des Lenkgetriebes ausgebildet ist, dessen Sonnenrad (51) mit der Abtriebswelle (8) des Lenkgetriebes verbunden ist und dessen Plantenradträger (52) das Abtriebsglied darstellt.

4. Antrieb nach Anspruch 1, dadurch gekennzeichnet, daß das Abtriebsglied (52) des dritten Planetenrad-Summengetriebes (5) gegenläufig zum Abtriebsglied (8) des Lenkgetriebes (100) umläuft, daß aber die genannten geeigneten Getriebeglieder (54, 55) den Antrbeisdrehsinn so umkehren, daß die zweiten Eingangsglieder (61, 71) des ersten (6) und des zweiten (7) Planetenrad-Summengetriebes im gleichen Drehsinn umlaufen.

5. Antrieb nach Anspruch 1, dadurch gekennzeichnet, daß das Antriebsgetriebe (200) ein Toroid-Reibradgetriebe mit kontinuierlich veränderlichem Übersetzungsverhältnis ist.

## Revendications

1. Dispositif de transmission à trains d'engrenages pour véhicule à chenilles, du type à direction à arbre (8) de transmission tournant, comprenant des premier (30) et second (20) arbres menants des chenilles, une transmission (200) de propulsion destinée à être actionnée par le moteur du véhicule, des premier (6) et second (7) trans épicycloïdaux totalisatuers qui comportent chacun un premier organe d'entrée (63, 73) entraîné par cette transmission de propulsion et un organe de sortie (62, 72) entraînant l'arbre menant des chenilles respectif, et un troisième train épicycloïdal totalisateur (5) ayant un premier organe d'entrée (53) destiné à être entraîné par le moteur et un organe (52) qui entraîne un second organe d'entrée (61) du premier train épicycloïdal totalisateur (6) par l'intermédiaire d'un jeu approprié de roues dentées (54, 55), dispositif caractérisé en ce qu'une transmission (100) de direction, à rapport variable en continu, comporte un élément d'entrée (9) qui est destiné à être entraîné par le moteur et un organe de sortie (8) qui entraîne de seconds organes d'entrée (71, 51) des second (7) et troisième (5) trains épicycloïdaux totalisateurs, respectivement.

2. Dispositif de transmission selon la revendication 1, caractérisé en ce que la transmission (100) de direction, à rapport à variation continue, est du type à traction par roulement dans une chage toroïdale.

3. Dispositif de transmission selon la revendication 1, caractérisé en ce que le troisième train épicycloïdal totalisateur (5) est un train épicycloïdal simple dont la couronne (53) est le premier organe d'entrée et est solidaire d'un arbre d'entrée (9) de la transmission de direction, dont la roue solaire centrale (51) est reliée à l'arbre de sortie (8) de cette transmission et dont le porte-satellites (52) est l'organe de sortie.

4. Dispositif de transmission selon la revendication 1, caractérisé en ce que l'organe de sortie (52) du troisième train épicycloïdal totalisateur (5) tourne dans le sens opposé à celui de l'arbre de sortie (8) de la transmission (100) de direction, mais le jeu approprié de roues dentées (54, 55) inverse le sens de la rotation d'entraînement, de façon que les seconds organes d'entrée (61, 71) des premier (6) et second (7) trains épicycloïdaux totalisateurs tournent dans le même sens.

5. Dispositif de transmission selon la revendication 1, caractérisé en ce que la transmission (200) de propulsion est une transmission, à rapport à variation continue, du type à traction par roulement dans une cage toroïdale.

Fig.1.

1

*Fig.2.*

0 137 264